# EUROPÄISCHE PATENTANMELDUNG

(11) **EP 0 714 854 A1**
(43) Veröffentlichungstag der Anmeldung: **05.06.1996**
(21) Anmeldenummer: 95117022.4
(22) Anmeldetag: 28.10.1995
(51) Int. Cl.: C02F 1/32, C02F 1/62, C02F 1/52, C02F 1/28

(54) **Verfahren zur Entfernung von Organobleiverbindungen aus Wasser**

(30) Priorität: 28.11.1994 DE 4442249
(71) Anmelder: Degussa Aktiengesellschaft, D-60311 Frankfurt (DE)
(72) Erfinder: Luy, Thomas, D-63517 Rodenbach (DE); Kuhn, Frank, D-63571 Gelnhausen (DE); Fuss, Stefan, D-63477 Maintal (DE)

(57) **Zusammenfassung**

Die Erfindung betrifft ein Verfahren zur Entfernung von Organobleiverbindungen, insbesondere Alkylbleiverbindungen, aus Wasser.

Die Bleientfernung gelingt bis auf Werte unter 30 ng/l, indem das Organobleiverbindungen enthaltende Wasser durch einen UV-Reaktor geleitet wird; dem zu behandelnden Wasser wird eine Hydroxylradikale bildende Verbindung, vorzugsweise Wasserstoffperoxid, zugesetzt, um eine Verspiegelung der UV-Lampe zu vermeiden. Nach der Bestrahlung wird ein Flockungshilfsmittel, inbesondere ein Fe- oder Al-salz, zugesetzt und das Wasser filtriert.

## Beschreibung

Die Erfindung richtet sich auf ein Verfahren zur Entfernung von Organobleiverbindungen, insbesondere Alkylbleiverbindungen, wie Trimethylblei und Triethylblei, aus Wasser, wobei die Bleiverbindungen mineralisiert und dann aus dem Wasser entfernt werden.

Organobleiverbindungen, wie Tetraethylblei und Tetramethylblei, werden als Antiklopfmittel Benzin zugemischt. In Produktionsanlagen zur Herstellung von Organobleiverbindungen ließ sich, wie Boden- und Grundwasseruntersuchungen zeigten, eine Kontaminierung des Bodens mit Organobleiverbindungen nicht vollständig vermeiden. Derart kontaminierte Böden müssen heute dekontaminiert werden, um einen unkontrollierten Austrag der Schadstoffe in das Grundwasser zu vermeiden.

Es wurde festgestellt, daß ein Teil der in den Boden gelangten Organobleiverbindungen beim Durchsickern von Regenwasser durch einen wasserungesättigten Boden oder bei direktem Kontakt des Grundwassers mit dem kontaminierten Boden durch biologischen Abbau teilweise gelöst und in den Wasserpfad eingetragen wird. Organobleiverbindungen lassen sich zudem im Boden durch Kontaktieren mit Wasserstoffperoxid mobilisieren, so daß ein Wasser mit erhöhtem Organobleigehalt resultiert. Um ein Abströmen von schadstoffhaltigem Wasser im Boden in eine nicht gewünschte Richtung zu vermeiden, wird durch Einbringen von Brunnen in den Grundwasserpfad das so kontaminierte Wasser abgepumpt oder mittels Entnahmebrunnen gefördert und oberirdisch mittels chemischer und/oder physikalischer Methoden von den Bleiverbindungen befreit. Anschließend kann das bleifreie Wasser wieder in den Boden infiltriert werden.

Es ist bekannt, daß Organobleiverbindungen enthaltendes Wasser an Aktivkohleadsorbern gereinigt werden können. Die Kapazität derartiger Adsorber ist aber sehr limitiert, und zwar besonders dann, wenn gleichzeitig andere organische Verbindungen in dem zu reinigenden Wasser zugegen sind.

Aufgabe der vorliegenden Erfindung ist, ein verbessertes Verfahren aufzuzeigen, womit auch große Mengen an kontaminiertem Wasser in einfacher und wirtschaftlicher Weise kontinuierlich zwecks Abtrennung der Organobleiverbindungen behandelt werden können. Ziel des Verfahrens ist es, eine möglichst hohe Abbaurate, und damit einen möglichst niedrigen Gesamtbleigehalt (Summe aus organisch gebundenem und anorganischem Blei), vorzugsweise unter 30 µg/l, zu erzielen.

Gefunden wurde ein Verfahren zur Entfernung von Organobleiverbindungen, insbesondere Alkylbleiverbindungen, aus Wasser, das dadurch gekennzeichnet ist, daß man das Organobleiverbindungen enthaltende Wasser nach Zugabe einer unter UV-Bestrahlung Hydroxylradikale bildenden Verbindung in einer eine Verspiegelung der UV-Strahler wirksam verhindernden Menge mit UV-Licht bestrahlt, dem so behandelten Wasser ein Flockungshilfsmittel aus der Reihe Metallhydroxidflocken bildender Metallverbindungen zusetzt, den pH-Wert, sofern erforderlich, auf einen Wert im Bereich von 6 bis 8 einstellt und anschließend den Niederschlag vom Wasser abtrennt.

Die Unteransprüche richten sich auf bevorzugte Ausführungsformen des Verfahrens.

Es wurde festgestellt, daß bereits durch UV-Bestrahlung eines Organobleiverbindungen enthaltenden Wassers ein Abbau der Bleiverbindungen erfolgt. Dieses Verfahren läßt sich in der Praxis allerdings nicht im Dauerbetrieb verwerten, weil sich auf den verwendeten UV-Strahlern ein Bleispiegel ausbildet. Die Bildung eines Bleispiegels wird erfindungsgemäß durch die Mitverwendung einer Quelle für Hydroxylradikale, wie Wasserstoffperoxid, im zu bestrahlenden Wasser verhindert. Der Fachmann wird die optimale Menge Wasserstoffperoxid durch orientierende Vorversuche ermitteln und eine solche Menge Wasserstoffperoxid einsetzen, welche eine Verspiegelung der UV-Strahler wirksam verhindert. Ein H₂O₂-Gehalt im Bereich von 25 bis 100 mg H₂O₂/l hat sich als üblicherweise ausreichend wirksam erwiesen. Sofern die von Bleiverbindungen zu befreiende wäßrige Phase einen hohen Gehalt an Gesamtschwefel enthält, muß eine entsprechend erhöhte Menge an H₂O₂ eingesetzt werden. Sofern das zu behandelnde Wasser einen hohen CSB-Wert (CSB = Chemischer Sauerstoffbedarf), etwa durch einen hohen Gehalt an Gesamtschwefel, aufweist und dieser zusätzlich erniedrigt werden soll, wird die eingesetzte Menge an Wasserstoffperoxid dem abzubauenden CSB-Wert entsprechend erhöht. In der Praxis wird die Zugabemenge an Wasserstoffperoxid im Bereich der 0,1- bis 5-fachen, insbesondere der 0,1- bis 2-fachen, äquivalenten Menge des CSB-Wertes des zu behandelnden Wassers liegen.

Zur UV-Bestrahlung des Wassers kommen übliche Strahlungsquellen infrage, also Niederdruck-, Mitteldruck- oder Hochdruckstrahler, wobei die letzten beiden Typen, zwischen welchen oft nicht differenziert wird, bevorzugt werden. Bei Verwendung von Hoch- beziehungsweise Mitteldruckstrahlern mit einer Strahlung im Bereich zwischen 185 und 400 nm liegt der Eintrag an elektrischer Strahlerenergie pro m³ des zu behandelnden Wassers üblicherweise im Bereich zwischen 1 und 30 kWh, insbesondere zwischen 5 und 15 kWh. Mit zunehmendem Energieeintrag nimmt die Rate an abgebauten Organobleiverbindungen zu; Abbauraten um und über 90 % lassen sich bei 10 bis 15 kWh/h erzielen. Die Bestrahlung des Bleialkylverbindungen und zugesetztes Wasserstoffperoxid enthaltenden Wassers kann in beliebigen Batch- oder vorzugsweise in Durchflußreaktoren durchgeführt werden.

Wie festgestellt wurde, führt die Behandlung mit Wasserstoffperoxid unter UV-Bestrahlung zwar zu hohen Abbauraten an Organoblei, jedoch nicht unmittelbar zu ausreichend bleifreiem Wasser. Mittels unterschiedlichster Filtrationsmaßnahmen, einschließlich solcher unter Verwendung von Membranfiltern, war es nicht möglich, den Gesamtbleigehalt auf Werte entsprechend dem Rest-Organobleigehalt abzusenken. Es wurde aber nun gefunden, daß sich der Gesamtgehalt an Blei (Summe aus organisch gebundenem Blei und anorganischem Blei) im Wasser auf Werte um 5 bis 30 µg/l absenken läßt, wenn dem Wasser ein Flockungshilfsmittel aus der Reihe Metallhydroxidflocken bildender Metallverbindungen in wirksamer Menge zugesetzt und der Niederschlag vom Wasser abgetrennt wird. Zwecks Ausbildung eines flockigen Niederschlags kann es erforderlich sein, den pH-Wert auf 6 bis 8 einzustellen. Als Flockungshilfsmittel haben sich im erfindungsgemäßen Verfahren insbesondere wasserlösliche Eisen- oder Aluminiumsalze als besonders geeignet erwiesen; auch Aluminatlauge oder frisch gefällte Metallhydroxidschlämme können zur Flockung eingesetzt werden. Bevorzugte Flockungsmittel sind Eisen(II)- oder Eisen(III)-chlorid, Fe(II)- oder Fe(III)-sulfat sowie Aluminiumchlorid oder -sulfat. Die Einsatzmenge der genannten Flockungsmittel richtet sich einerseits nach dem vorhandenen Bleigehalt andererseits auch nach den verfügbaren Filtrationseinrichtungen. Pro µMol Bleiverbindung werden im allgemeinen 1 bis 1000 µMol, vorzugsweise 10 bis 100 µMol, Flockungsmittel eingesetzt. Die Abtrennung des gebildeten Hydroxidniederschlags, worin das Blei gebunden ist, kann durch Filtration oder Zentrifugieren erfolgen. Infrage kommen beispielsweise Tiefenfilter, Oberflächenfilter, Anschwemmfilter, Cricketfiiter (Kombination aus einem Vertikal-Druckblattfilter und einem Kerzenfilter), Ultrafilter und Membranfilter, beispielsweise solche mit einer Teflonmembran mit einer Porenweite um 0,15 µm. Das nach der Abtrennung des Niederschlags erhaltene bleifreie Wasser kann, sofern erwünscht, über Aktivkohleadsorber geleitet und anschließend einem Vorfluter oder anderen Verwendung zugeführt werden.

Durch die erfindungsgemäße Behandlung des mit Bleialkylverbindungen kontaminierten Wassers ist es möglich geworden, die Bleiverbindungen bis zu einem Restgehalt an Gesamtblei im Bereich von 5 bis 50 µg/l, insbesondere unter 30 µg/l, wenn das Wasser in Gegenwart von Wasserstoffperoxid unter Verwendung einer UV-Strahlungsquelle bestrahlt und nach Zugabe eines anorganischen Flockungshilfsmittels filtriert wird. Die Entfernung der Bleiverbindungen aus dem Wasser erfolgt unter Verwendung üblicher Apparaturen.

### Beispiele

### Bestimmung des Gehalts an gesamtorganischem Blei in wäßrigen Proben

### Prinzip:

Die organischen Bleiverbindungen werden mit Jodmonochlorid zu Dialkylen abgebaut. Durch Pufferung wird dieser Ansatz zur Extraktion mit einer Dithiozon-Chloroformphase vorbereitet und unter Zugabe von EDTA alle anorganischen Metalle maskiert, so daß wirklich nur die organischen Bleiverbindungen an das Dithiozon gebunden werden. Dieser Komplex wird dann durch eine zweite Extraktion mit einer salpetersauren Wasserstoffperoxidlösung zerstört, so daß dann das organische Blei mittels AAS (Atomabsorptionsspektroskopie) bestimmt werden kann.

### Benötigte Chemikalien:

Jodmonochloridlösung: 565 g Kaliumjodid werden in ca. 1,5 l Wasser gelöst und mit 2,5 l konzentrierter Salzsäure versetzt. Nach spontaner Zugabe von 382 g Kaliumjodat wird bis zur klaren Lösung gerührt.
Pufferlösung: 14 g Triammoniumcitrat und 30 g Natriumsulfit (wasserfrei) werden in ca. 500 ml Wasser gelöst. Nach Zugabe von 250 ml ca. 30 %iger Ammoniaklösung wird auf 1 Liter aufgefüllt.
EDTA-Lösung: 37 g Na-EDTA werden in 1 Liter Wasser gelöst.
Dithizon-Lösung: 10 mg Dithizon werden in 500 ml Chloroform gelöst.
Salpetersäure-Wasserstoffperoxidlösung: Je 50 ml konzentrierter Salpetersäure und 30 %ige Peroxidlösung werden auf 1 Liter mit Wasser aufgefüllt.

### Durchführung:

100 ml Probe werden in einem braunen Scheidetrichter mit 10 ml Jodmonochloridlösung versetzt und 5 Minuten stehen lassen. Danach werden mit einem Kippautomaten 50 ml Pufferlösung 10 ml EDTA-Lösung zugegeben und bis zum vollständigen Jodabbau geschwenkt. Nach Zugabe von 30 ml Dithizonlösung wird 30 Sekunden geschüttelt und absetzen lassen. Die Chloroformphase wird dann in einen zweiten Scheidetrichter abgelassen, in dem sich 10 ml der Säurelösung befinden. Dann werden in den ersten Trichter nochmals 30 ml Chloroform gegeben und extrahiert, nach Absetzung wird die untere Phase zur ersten Extraktion gegeben. Der zweite Trichter wird auch 30 Sekunden geschüttelt. Nach akkuratem Ablassen der Chloroformphase wird die saure Phase an einem AAS-Gerät auf Blei untersucht. Die Proben werden gegen Standard gemessen.

### Bestimmung des Gesamt-Bleigehalts:

Das Wasser wird mit HNO₃ angesäuert (1 ml 65 %ige HNO₃ pro 100 ml Wasser. Der Bleigehalt dieser Lösung wird mittels AAS bestimmt.

### Beispiel 1

Ein aus einem kontaminierten Boden stammendes Grundwasser mit einem Gehalt von 250 bis 270 µg/l an organisch gebundenem Blei wurde nach Zugabe von Wasserstoffperoxid (50 mg/l) kontinuierlich durch einen UV-Reaktor (5 kW-Strahler) geleitet. Wie aus der Tabelle 1 hervorgeht, steigt der Abbaugrad der Organobleiverbindungen mit abnehmendem Durchfluß und damit zunehmender Strahlungsdosis (kWh/m³). Eine Zugabemenge von 50 mg H₂O₂/l Wasser reichte aus, um eine Verspiegelung der UV-Tauchlampe wirksam zu verhindern.

**Tabelle 1**

| Durchfluß (l/h) | Organisch gebundenes Blei (µg/l) | | Abbaugrad % |
|---|---|---|---|
| | Zulauf | Ablauf | |
| 1800 | 260 | 70 | 73,1 |
| 1300 | 260 | 50 | 80,8 |
| 1000 | 260 | 43 | 83,5 |
| 750 | 270 | 29 | 89,3 |
| 500 | 250 | 24 | 90,4 |
| 300 | 260 | 21 | 91,9 |
| 150 | 260 | 5 | 98,1 |

### Beispiel 2

Mit Alkylbleiverbindungen kontaminiertes Grundwasser aus einem kontaminierten Boden im Bereich einer Produktionsanlage für Alkylbleiverbindungen wurde nach Durchströmen eines Sandfilters mit 50 mg H₂O₂ pro l Wasser versetzt und durch einen UV-Reaktor mit einer 4 kW-Mitteldrucklampe geleitet - Reaktorlänge 600 mm, innerer Durchmesser 100 mm, UV-Lampe längs des Reaktors zentral angeordnet, Schichtdicke des bestrahlten Wassers 30 mm, Durchfluß im Bereich 0,2 bis 1 m³/h.

Das den UV-Reaktor verlassende Wasser wurde erfindungsgemäß mit einem Flockungshilfsmittel versetzt - Art und Zugabemenge sind der Tabelle zu entnehmen. Anschließend wurde das Wasser filtriert (= Pb-Filter). Bei nichterfindungsgemäßen Versuchen (Nr. 1 bis 3) wurde kein Flockungshilfsmittel zugesetzt. Die Flockungshilfsmittelmenge in den Versuchen 4 und 8 führte zu einer Abbaurate an Gesamt-Pb von etwa 50 beziehungsweise 40 %, wohingegen mit höherer Flockungshilfsmittelmenge (Versuche 5 bis 7 und 9 bis 12) eine Abbaurate um/über 70 % erzielt wurde. Flockungshilfsmittel vom Phosphattypus (Versuch 13) sind unwirksam. Das Filtrat der Versuche 1 bis 4 wurde über einen Aktivkohleadsorber geleitet. Der Gehalt an Organo-Blei und Gesamt-Blei wurde, soweit in der Tabelle 2 angegeben, nach dem Sandfilter und nach dem Pb-Filter beziehungsweise teilweise nach dem Aktivkohleadsorber bestimmt. Die Versuche (Tabelle 2) zeigen, daß der Verwendung eines Flockungshilfsmittels eine maßgebliche Bedeutung zukommt. Bei fehlender oder ungenügender Dosierung an Flockungshilfsmittel werden keine ausreichend niedrigen Restgehalte an Gesamt-Pb (= organisch und anorganisch gebundenes Blei) erzielt. Ohne eine wirksame Pb-Filtration kommt es zu einer raschen Beladung des Aktivkohleadsorbers, was einen häufigen Filteraustausch oder eine aufwendige Regenerierung erforderlich macht.

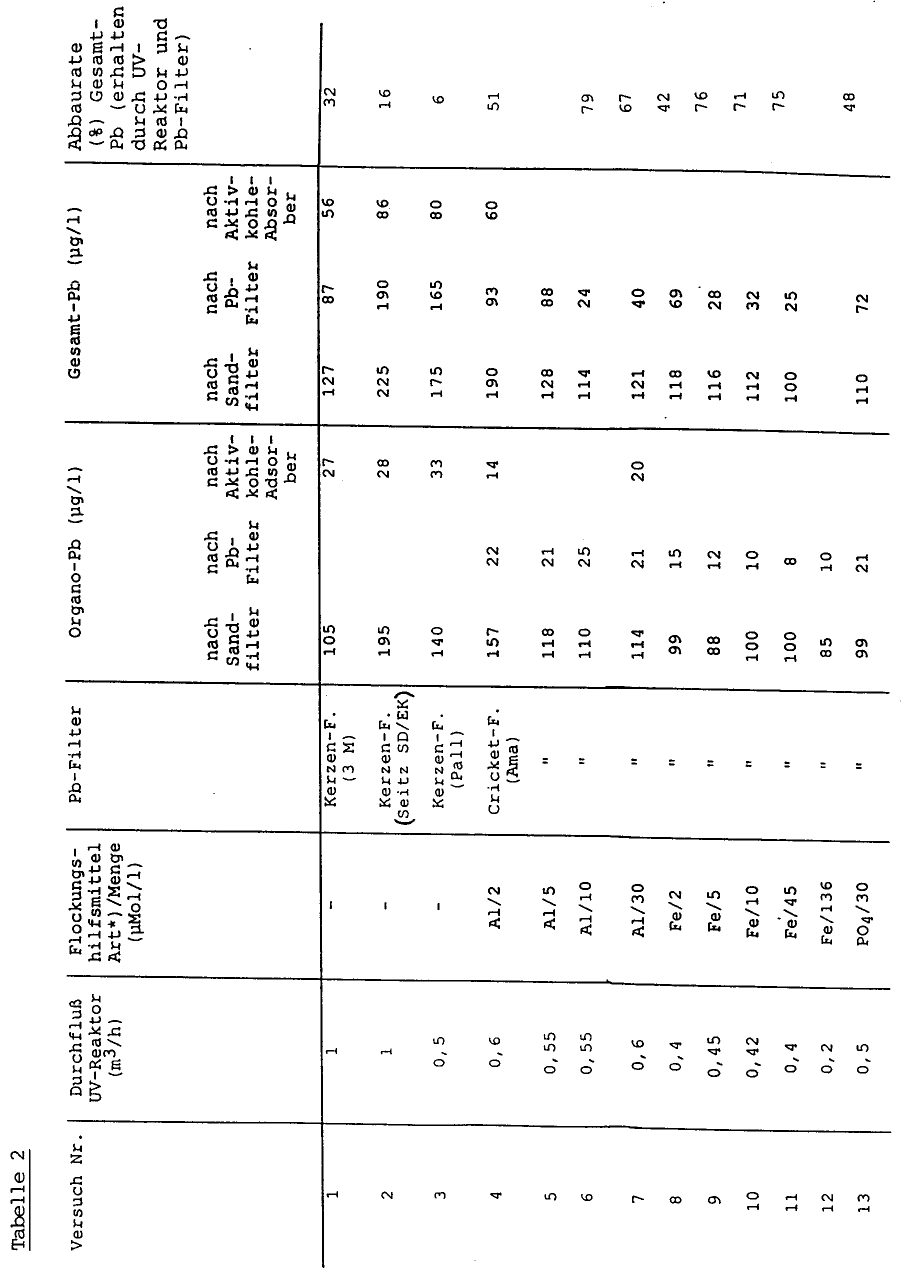

## Patentansprüche

1. Verfahren zur Entfernung von Organobleiverbindungen, insbesondere Alkylbleiverbindungen, aus Wasser,
dadurch gekennzeichnet,
daß man das Organobleiverbindungen enthaltende Wasser nach Zugabe einer unter UV-Bestrahlung Hydroxylradikale bildenden Verbindung in einer eine Verspiegelung der UV-Strahler wirksam verhindernden Menge mit UV-Licht bestrahlt, dem so behandelten Wasser ein Flockungshilfsmittel aus der Reihe Metallhydroxidflocken bildender Metallverbindungen zusetzt, den pH-Wert, sofern erforderlich, auf einen Wert im Bereich von 6 bis 8 einstellt und anschließend den Niederschlag vom Wasser abtrennt.

2. Verfahren nach Anspruch 1,
dadurch gekennzeichnet,
daß man als Hydroxylradikale bildende Verbindung Wasserstoffperoxid in einer Menge von 25 bis 100 mg H₂O₂ pro l des zu behandelnden Wassers verwendet.

3. Verfahren nach Anspruch 1,
dadurch gekennzeichnet,
daß man gleichzeitig den CSB-Wert des Wassers erniedrigt, indem man als Hydroxylradikale bildende Verbindung Wasserstoffperoxid in einer Menge des 0,1- bis 5-fachen, insbesondere 0,1- bis 2-fachen, äquivalenten Menge des CSB-Wertes des Wassers verwendet.

4. Verfahren nach einem der Ansprüche 1 bis 3,
dadurch gekennzeichnet,
daß man das zu reinigende Wasser mittels eines oder mehrerer UV-Strahler mit polychromatischer Strahlung im Bereich von 185 bis 400 nm bestrahlt, wobei der Eintrag an elektrischer Strahlerenergie im Bereich von 1 bis 30 kWh, vorzugsweise 5 bis 15 kWh, pro m³ Wasser liegt.

5. Verfahren nach einem der Ansprüche 1 bis 4,
dadurch gekennzeichnet,
daß man als Flockungshilfsmittel ein wasserlösliches Eisen- oder Aluminiumsalz verwendet und je µMol Organobleiverbindung 1 bis 1000 µMol, insbesondere 1 bis 100 µMol, Flockungshilfsmittel einsetzt.

6. Verfahren nach einem der Ansprüche 1 bis 5,
dadurch gekennzeichnet,
daß man zur Abtrennung des Niederschlags ein Cricketfilter verwendet.

7. Verfahren nach einem der Ansprüche 1 bis 6,
dadurch gekennzeichnet,
daß man das vom Niederschlag befreite Wasser über einen Aktivkohleadsorber leitet.
